# EUROPEAN PATENT SPECIFICATION

(11) **EP 3 008 592 B1**
(45) Date of publication and mention of the grant of the patent: **31.10.2018**
(21) Application number: 13773973.6
(22) Date of filing: 20.09.2013
(51) Int. Cl.: G06F 9/48

(54) **PRE-FETCHING CONTENT FOR SERVICE-CONNECTED APPLICATIONS**
VORABRUF VON INHALT FÜR DIENSTVERBUNDENE ANWENDUNGEN
PRE-EXTRACTION D'UN CONTENU POUR DES APPLICATIONS CONNECTEES A UN SERVICE

(30) Priority: 12.06.2013 US 201313915946
(43) Date of publication of application: 20.04.2016
(73) Proprietor: Microsoft Technology Licensing, LLC, Redmond, WA 98052 (US)
(72) Inventor: MERRY, Matthew, Redmond, WA 98052-6399 (US); IYIGUN, Mehmet, Redmond, WA 98052-6399 (US); ELDRIDGE, Jonathan, Redmond, WA 98052-6399 (US); KRALJ, Milos, Redmond, WA 98052-6399 (US); OSTERMAN, Lawrence, Redmond, WA 98052-6399 (US); MILLER, Cody, Redmond, WA 98052-6399 (US); SARDA, Sriram, Redmond, WA 98052-6399 (US); BROWN, Zachary, Redmond, WA 98052-6399 (US); KISHAN, Arun, Redmond, WA 98052-6399 (US)
(74) Representative: Goddar, Heinz J.
(86) International application number: PCT/US2013/060750
(87) International publication number: WO 2014/200527

(56) References cited:
- WO-A2-01/02951
- US-A1- 2010 179 980
- TINGXIN YAN ET AL: "Fast app launching for mobile devices using predictive user context", MOBISYS 2012: 10TH INTERNATIONAL CONFERENCE ON MOBILE SYSTEMS, APPLICATIONS AND SERVICES, 1 January 2012 (2012-01-01), page 113, XP055106616, DOI: 10.1145/2307636.2307648 ISBN: 978-1-45-031301-8
- GRIFFIOEN J ET AL: "Automatic prefetching in a WAN", ADVANCES IN PARALLEL AND DISTRIBUTED SYSTEMS, 1993., PROCEEDINGS OF TH E IEEE WORKSHOP ON PRINCETON, NJ, USA 6 OCT. 1993, LOS ALAMITOS, CA, USA,IEEE COMPUT. SOC, 1 January 1993 (1993-01-01), pages 8-12, XP010223413, DOI: 10.1109/APADS.1993.588721 ISBN: 978-0-8186-5250-9

## Description

### BACKGROUND

As applications are more and more connected to internet services, these applications tend to require more data from these services. It may be desirable to have such applications obtain this data as quickly as possible.

Service integration presents opportunities and challenges for an app developer. On one hand, service integration allows apps to be up to date with the latest content, but it places the challenge of obtaining that content on the app developer. Typically, downloading the content is a simple matter; however, this costly network operation usually occurs at app launch. This leads to the user's perception that apps are not fresh - e.g., when they start, they must hit the network to get content and users have to wait.

This tends to lead to an overall poor user experience, especially when users first launch their applications. It may be desirable to improve overall app experience by getting app content to the device before applications need it. Document D1 TINGXIN YAN ET AL: "Fast app launching for mobile devices using predictive user context",MOBISYS 2012: 10TH INTERNATIONAL CONFERENCE ON MOBILE SYSTEMS, APPLICATIONS AND SERVICES, 1 January 2012, page 113 discloses an approach for app-specific prelaunching which can reduce the perceived delay.

### SUMMARY

The following presents a simplified summary of the innovation in order to provide a basic understanding of some aspects described herein. This summary is not an extensive overview of the claimed subject matter. It is intended to neither identify key or critical elements of the claimed subject matter nor delineate the scope of the subject innovation. Its sole purpose is to present some concepts of the claimed subject matter in a simplified form as a prelude to the more detailed description that is presented later.

Systems and methods of pre-fetching data for applications in a computer system that are terminated or suspended and may be pre-launched by the computer system are disclosed. The applications may employ data that is remote from the computer system and available from a third party content resource. A method for pre-fetching such remote data comprises associating a set of application with such data and/or its location; determining a set of pre-fetching conditions, determining which applications may be pre-fetched and pre-fetching the data, if pre-fetch conditions meet a desired pre-fetch policy. A predictive module or technique may be used to identify those applications which may be pre-launched. The present system may comprise a pre-fetch success module capable of measuring the success data for a current pre-fetch and associating such success data with an application to improve future pre-fetches.

In one embodiment, a method for pre-fetching data for applications is disclosed, comprising: associating a set of applications with a set of data, said data capable of being retrieved from a set of content sources; determining a set of pre-fetch conditions, said pre-fetch conditions comprising one of a group, said group comprising: system resource availability, predictive measure of whether an application may be pre-launched, data on user settings for pre-fetch, data on whether previous pre-fetches for a given application were successful; determining which applications may be pre-fetched; and if said set of conditions satisfied a given policy, performing pre-fetch of data from said content source. After pre-fetch, the data may be stored and made available to the application.

In another embodiment, a system for pre-fetching data for applications is disclosed, comprising: a set of APIs, each said APIs associated with an application and each said API capable of storing data to be pre-fetched for said application; a pre-fetch initiator policy module, said pre-fetch initiator policy module capable of initiating the pre-fetch process, depending upon a set of pre-fetch conditions; a pre-fetch process module, said pre-fetch process module capable of pre-fetching data from a remote content source for an application identified by said pre-fetch initiator policy module; and a computer storage, said computer storage capable of storing said pre-fetched data from said remote content source, such that said pre-fetched data may be made available to said application.

Other features and aspects of the present system are presented below in the Detailed Description when read in connection with the drawings presented within this application.

### BRIEF DESCRIPTION OF THE DRAWINGS

Exemplary embodiments are illustrated in referenced figures of the drawings. It is intended that the embodiments and figures disclosed herein are to be considered illustrative rather than restrictive.
FIG. 1 depicts one embodiment of an exemplary environment in which the present system may reside as in accordance with the principles of the present application.
FIG. 2 shows one embodiment of a present system as made in accordance with the principles of the present application.
FIG. 3 shows one embodiment in flowchart form the operation of the present system.
FIGS 4 and 5 depict one embodiment of a predictor module and its operation on application for pre-launching.
.FIG. 6 depicts one adaptive predictor that may be used in cooperation with the pre-fetch operations of the present application.
FIG. 7 depicts one switch rate predictor that may be used in cooperation with the pre-fetch operations of the present application.

### DETAILED DESCRIPTION

As utilized herein, terms "component," "system," "interface," "controller" and the like are intended to refer to a computer-related entity, either hardware, software (e.g., in execution), and/or firmware. For example, any of these terms can be a process running on a processor, a processor, an object, an executable, a program, and/or a computer. By way of illustration, both an application running on a server and the server can be a component and/or controller. One or more components/controllers can reside within a process and a component/controller can be localized on one computer and/or distributed between two or more computers.

The claimed subject matter is described with reference to the drawings, wherein like reference numerals are used to refer to like elements throughout. In the following description, for purposes of explanation, numerous specific details are set forth in order to provide a thorough understanding of the subject innovation. It may be evident, however, that the claimed subject matter may be practiced without these specific details. In other instances, well-known structures and devices are shown in block diagram form in order to facilitate describing the subject innovation.

### Overview of Pre-Fetching Service-Connected Apps

Many embodiments of the present application affect present systems, methods and/or techniques for service-backed applications to pre-fetch data for an improved user experience. In many embodiments, present systems allow any app that may typically fetch data from a server (e.g., using standard HTTP or other protocols) to be able to take advantage of this pre-fetching. In one embodiment, it may be desirable that apps that need to get content do so before displaying anything useful to users. In some embodiments, present systems may discern between certain categories of apps that more typically fall into this category. For example of just a few categories of such app, the following is a nominal list:
1. Entertainment
2. News and Weather
3. Shopping
4. Sports
5. Travel

Apps in these categories may represent over 25% of the apps in a typical app store. As many of these apps are pre-installed in a computer system at point of sale, it may be that nearly all users have one or multiple apps that may benefit from the techniques of the present application. For merely one example, consider a typical news app. News apps, by their definition, face the issue of obtaining content - i.e., the latest news - and displaying that to users when the app is launched. When a news reader app starts, it fetches the latest news and then displays the articles to the user.

Currently, app activation may typically be broken down into two stages. Stage one is leading up until the app presents any user interface to the user (e.g., splash screen dismissal) and involves a lot of "setup" by the OS in launching and preparing the application process. Stage two comes after the splash screen is dismissed and app code takes over and sets up its canvas to display information to the user.

With service connected applications, typically stage two involves retrieving information from a service, preparing that information for display and finally displaying it. In such cases, users may be faced with an icon indicating a wait period - e.g., a "spinning doughnut" or other progress indicator -- while the app fetches data from its service. The amount of time spent obtaining content (or otherwise, spent in a state where an application is obtaining content to display to a user) may be a function of many variables - e.g., network connectivity, network speed, availability of servers and the amount of content to be downloaded and parsed.

In collecting sample data from service-connected apps downloading content from outside resources, the inventors have noted a few interesting statistics:
1. The majority of content downloaded by service-connected apps is image content;
2. After ignoring video downloads (e.g., from Hulu or Sports Illustrated or other streaming video applications and/or the like), image content represents approximately 75% of all content; and
3. Most of such downloaded image content is under 100kB in size.

### Exemplary Environment

In several embodiments of the present application, there are systems and methods presented herein that allow apps that are service-connected to content sources that are remote from the computer system to pre-fetch such content, as desired.

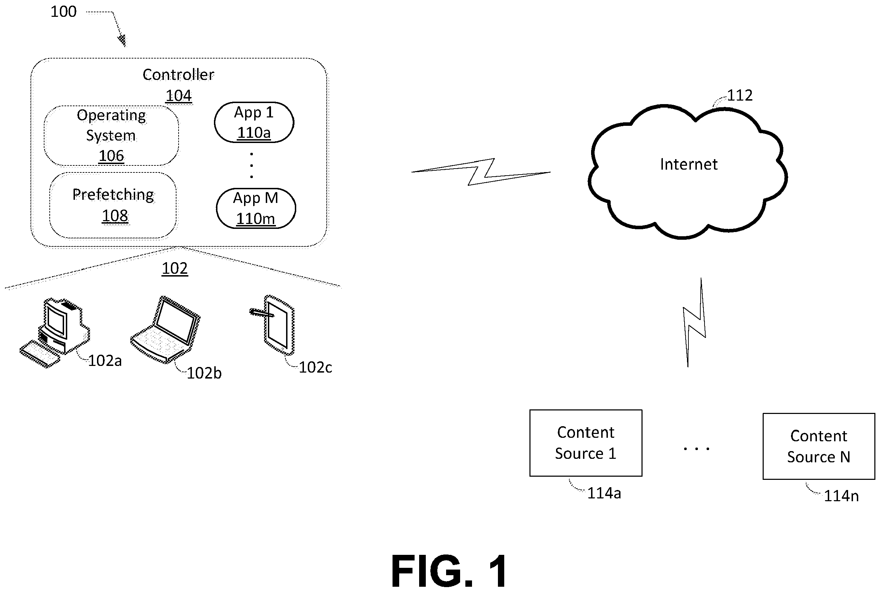

FIG. 1 is one embodiment of an exemplary environment in which pre-fetching service-connected apps may reside. As may be seen in FIG. 1, embodiments of the present system may be installed within a computer system 102. Suitable computer systems may comprise any number of systems - e.g., PCs/desktops 102a, laptop 102b, tablets 102c, or any smart device, smart phone. It may suffice that the system has sufficient processing and memory capabilities to run the present system.

Computer systems 102 may further comprise controller 104 which may in turn have one or more processors (e.g., a CPU and/or GPU) and computer memory, as is known in the art. Computer system 102 may further have operating system 106 installed in memory and working to control the lifecycles of various apps that may be activated by users of the computer system.

One embodiment of the present application may have installed pre-fetching module 108 which may work in conjunction with operating system 106 to affect the methods and techniques of the present systems and their various embodiments, as described herein.

As will be discussed in greater detail below, App1 (110a) through AppM (110m) may reside in the computer system and maybe in any given process state - e.g., running, not running, suspended or the like. These apps may be service-connected to a number of content sources (e.g., 112a through 112n) - perhaps, via the Internet 112 through any known protocol (or via any other network and/or remote access protocol known).

In other embodiments of the present system (and as will be discussed in greater detail below), pre-fetching may be installed (in whole or in parts) remotely from any particular computer system. Modules of pre-fetching may be accessible to computer systems via a client-server model (or any other suitable model).

### One Embodiment

In one embodiment, a system may provide a mechanism for applications to indicate the set of content they require. In some embodiments, there is a plurality of ways in which an application may indicate this content. For example, an application may indicate:
(1) the content directly via a list of Uniform Resource Identifiers (URIs); and/or
(2) the content in a response to a request made to a web service.

In another embodiment, a combination of content from (1) and (2) above may be possible -- e.g., consider mixing both content and source, or providing additional information on the client on how the operating system is to interpret the content returned in (2). In addition, it may be possible that content may be indicated at install time via app registration or at runtime by calling operating system components.

Once this information is obtained, one embodiment of the present system may provide a mechanism for the OS to obtain the content as indicated by the application. It is desirable that this mechanism provided for the pre-fetching of content to be automatically available to applications.

In another embodiment, the present system may provide the application a transparent fallback mechanism for content that was not pre-fetched -- such that applications may not be able to tell the difference between pre-fetched content and non-pre-fetched content.

In yet another embodiment, it may be desirable that the present system provide such a mechanism to ensure pre-fetching does not negatively impact user experience by monitoring system resources (e.g., CPU utilization, GPU utilization, memory utilization, I/O utilization, battery state of charge), measuring the benefit of the pre-fetch operation for a given application and/or respecting user settings. These system resources may form a set of conditions - e.g., a threshold test or the like - to determine whether pre-fetch is (e.g., on balance) a benefit to the user experience. For merely one example, if certain system resources are below a threshold level, then the pre-fetch operation may negatively impact the present user experience - and the pre-fetch may not occur.

In some embodiments, the present system may determine a measure of likelihood that the application in need of pre-fetch may be activated and/or initiated by the user. If a given application is likely to be activated (e.g., by some prediction module and/or method), then the present system may balance out - e.g., a high likelihood of application activation - with the amount of available system resources. In one embodiment, the system resources and predictive measure of activation may dynamically change condition for pre-fetch to be determined. For example, a high likelihood of application activation may lower the condition for having a certain amount or level of system resources.

In addition, the present system may provide a mechanism for application developers to verify optimal functioning of the pre-fetching for their applications.

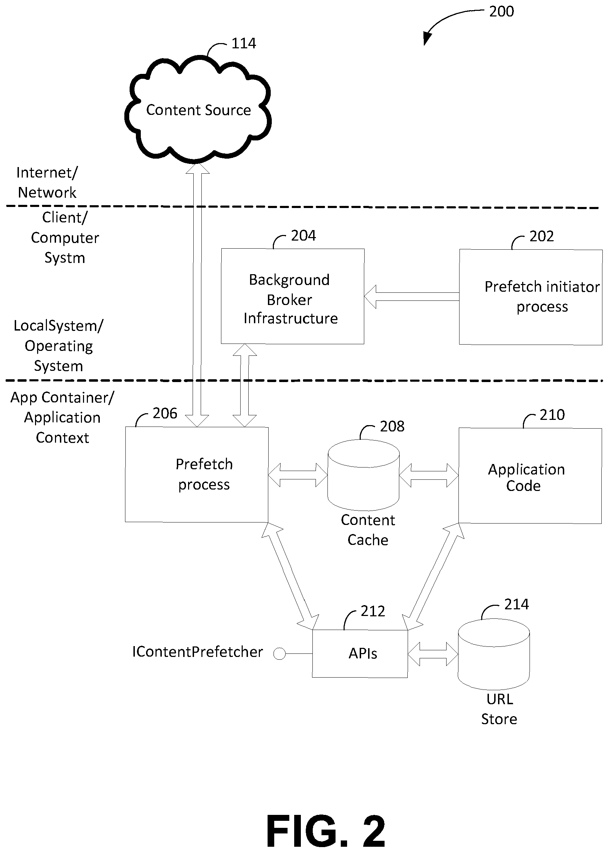

FIG. 2 depicts one possible embodiment of the systems and methods in an exemplary environment (200) -- as made in accordance with the principles of the present application.

As noted from FIG. 1 above, apps may be service-connected to content sources (e.g., 3^{rd} party service 114) via the internet or other networks (via any known protocol). The present system may be represented as a client for such service.

In one embodiment, the present system may comprise one or more following modules:
1. a pre-fetch initiator process (202) which is responsible for starting the pre-fetch operation;
2. a pre-fetch operation/process (206) which runs in the context of the application (such as the App Container - or some similar sort of application context) which performs the pre-fetch operations; and/or
3. Application runtime (Client) APIs (212) to retrieve the pre-fetched content.

In some embodiments, the pre-fetch initiator process may further comprise a prediction and/or predictor module, as discussed further herein. It may be possible to have the prediction module residing separately from the computer system - e.g., on a server and the prediction module available as a cloud based and/or server based application. In either case, it may be desirable for prediction results to be aggregated from a community of users and shared across a number of users.

These application runtime APIs (212) provide a mechanism for applications to indicate the set of content that need to be pre-fetched. In some embodiments, there may be a separate set of APIs (e.g., between Pre-fetch operation/process 206 and cache 208) that an application may use to retrieve the pre-fetched content.

In one embodiment, the client APIs may be employed by applications and the pre-fetch service (which may run in the background) to either set or retrieve the list of pre-fetch URIs. The background task may communicate with the 3rd party content providers to obtain the resources at the given URI, and may collect feedback and communicate this to the pre-fetch service to evolve the pre-fetch module. The client APIs may interact with a durable URI store that may be partitioned based on the application's app container. Both the background task and the application code may interact directly or indirectly with the content cache via HTTP client APIs.

As shown in FIG. 2, several of these modules may reside in the application container within the local (or computer) system presently employed by the user. In addition, several modules may reside in the computer system and work cooperatively with the operating system.

It will be appreciated that this present system may be architected differently (with different modules residing in different parts of the computer system, or remotely from the computer system) and the scope of the present application encompasses such different embodiments and architectures.

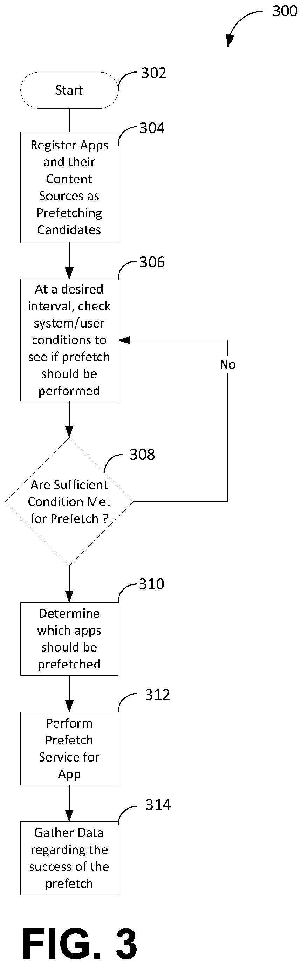

FIG. 3 is one embodiment of a high level flowchart (300) for the present system. The present system may start at 302. As part of an initialization, the present system may receive (at 304) data and/or metadata regarding applications that may need content from a third party source - so that the present system may identify applications as potential candidates for pre-fetching. The present system may associate and/or register this data and/or metadata with a given application. In some embodiments (as discussed herein), the association may give the addresses or other location indicia (e.g., URLs) of the data that needs to be pre-fetched for a given application.

At 306, the present system may (at a desirable interval of time - or any other suitable basis) check either system and/or user conditions to see if pre-fetch should be performed. As will be discussed in greater detail below, such conditions may comprise: whether the system resources are at a point where performing pre-fetch may not impact the current user experience (e.g., by slowing system response for currently running apps or the like); whether there is likely to be app that may be activated by the user and pre-fetching 3^{rd} party content would appreciably improve user experience. In some embodiments, it may be desirable to predict which apps may be activated - and, if available on the computer system, to be pre-launched. A pre-launching module may be utilized to identify and/or predict which apps may be likely to be activated from either a not running or a suspended state.

If the conditions are not met, then the system may operate a continuous loop of testing such conditions and proceed if and/or when such conditions may be met.

If sufficient conditions are met, then the present system may proceed to step 310. The present system at that point may want to determine which, among all possible candidates, apps will be queued for pre-fetch. The present system may determine and/or order a list of applications for pre-fetching according to one or several of the pre-fetch conditions determined by the present system. For merely one example, the applications may be ordered by their likelihood of pre-launching or launching, ordered by their impact on available system resources, ordered by user preference, ordered by previous success of pre-fetching, and/or any combination of above factors etc.

Once one or more apps have been identified for pre-fetch, the present system may perform the actual pre-fetch at 312. In one embodiment, such pre-fetch may proceed in the background of the present system - which may proceed transparently to the user; and hence, improve the user's experience of the computer system. In other embodiments, such pre-fetch may proceed in the foreground or other process state possible. It will be appreciated that the order of these particular steps may be interchanged to achieve same, similar and/or alternative embodiments. For example, the present system may determine pre-fetch conditions, determine which application may be pre-fetched and then the pre-fetch conditions may be tested against a number of policies, rules and/or heuristics prior to pre-fetching any data for an application. The scope of the present application encompasses all such embodiments.

Once accomplished, the present system may optionally perform a data gathering step (at 314) to measure the success of the pre-fetch. The success data may mirror some of the same data as pre-fetch conditions. For example, success data may comprise: the impact of the current pre-fetch on system resources, whether the application being pre-fetched actually launched, whether the pre-fetched resources were actually available and/or utilized by the application, and/or the like. Depending on the success data, it may then be possible to dynamically change some of the policies for pre-fetch - e.g., that may utilize pre-fetch conditions. This may lead to improvements for the present system.

As mentioned, the pre-fetch process may operate under a number of modes: (1) where the pre-fetch process obtains a list of URIs indicated by the call to the APIs and perform a fetch against each URI in the list; (2) where the pre-fetch process is capable of acting upon the response to the pre-fetch request and depending upon the response to the fetch request, the fetch may be retried or may be redirected to another URI; (3) where the pre-fetching process may obtain the URI which points to a well formed list of URIs; and/or (4) where an application indicates to the operating system how to interpret application specific data returned from the service to determine the set of pre-fetch URIs. This list may be obtained by making a request to the URI and upon successful response the list format is verified. Once verified, the URIs indicated in the list are themselves fetched. Again, the pre-fetch process may be capable of acting upon the response to the pre-fetch request and can appropriately retry or be redirected to another URI. In some embodiments, it may be possible to have the service indicate to the target that new data is available. In this case, the present system may affect a "push" based model. This may bypass the step of polling for new content in some cases -- since it is known a priori what new content is available.

On successful retrieval of a resource indicated by the pre-fetch URI, the content may be stored in a cache that is accessible by the application. The cache's lifetime may be managed by the OS and may be kept for an arbitrarily long time.

The pre-fetch process may additionally provide detailed logging of each operation and the success/failure of said operations to enable developers to diagnose failures in the pre-fetch operation.

If indicated by the pre-fetch initiator process, the pre-fetch process may calculate the benefit of the previous pre-fetch. The score may be calculated by analyzing the content that was previously pre-fetched and determining if this content was accessed by the application. If the content was accessed, this may indicate a good score. If content was not accessed, it may indicate a bad score. Scores for the pre-fetch operation may then be reported back to the pre-fetch initiator process. If the system indicates an out of resource condition has occurred the pre-fetch process terminates.

At runtime, an application may make a request for a resource at a particular URI. This request may first consult the local cache and if a valid entry exists in the cache for a requested resource, the resource may be served from the cache. If the content does not exist in the cache, then the content is requested from the service using the provided URI. Typically, these requests would be HTTP requests made via HTTP APIs. If the pre-fetcher has pre-fetched the requested resource, and that resource is still valid in the cache, the request may come from the cache which tends to be quicker than transferring the content from a remote server. When an application retrieves a resource from the cache, this retrieval is tracked to enable calculation of benefit scores in the pre-fetch process.

Additional details on these various steps and techniques are described herein. It will be appreciated that other implementations of pre-fetch for service connected applications are possible and that the scope of the present application encompasses those alternative implementations and/or embodiments. It may suffice that the present system identify apps that may benefit from a pre-fetch, that appropriate opportunities and/or conditions for such pre-fetch are identified and that suitable candidates for pre-fetch are allowed to pre-fetch such third party content when such opportunities and/or conditions arise.

### Client APIs

In addition, it may be desirable to provide an API to enable application developers to indicate the content which is to be pre-fetched for the application. As previously mentioned, there are a number of mechanisms to affect this. For example, the content may be specified directly via a list of URIs and stored in optional URL store 214 in the computer system (or remotely from the computer system). Alternatively, the content may be specified in a response to a request made to a web service by the application code 210.

In addition, these multiple modes of operation for the client APIs may be used in conjunction with one another. In one mode, the developer may call an API and supply a list of URIs which is to be pre-fetched. The developer may update this list at any point during the runtime of their application. In another mode, the developer may call an API to provide a single URI which points to a server-hosted, well-formed list of URIs to be pre-fetched. This list may be resolved at the time of the pre-fetch operation such that the most up-to-date version of the list is obtained prior to pre-fetching.

In particular, the URIs provided by the application may be HTTP URIs. Once either one of these APIs are called, an application is considered pre-fetchable. A pre-fetch operation for an application may be initiated by the pre-fetch initiator.

The following in one possible embodiment of a client API:

```
      namespace OS.Networking.Http
      {
         interface IContentPre-fetcher : IInspectable
        {
          [propget] HRESULT ContentUris([out, retval]
     OS.Foundation.Collections.IVector<OS.Foundation.Uri*> **value);
          [propput] HRESULT IndirectContentUri([in] OS.Foundation.Uri *value);
          [propget] HRESULT IndirectContentUri([out, retval] OS.Foundation.Uri
      **value);
        }
       [static(NTDDI_OS, IHttpPre-fetcher)]
       Runtime class HttpPre-fetcher
       {
      } }
```

In addition, it may be desirable to add the ability to retrieve information on the last pre-fetch operation to this API. For one example of the information provided may be the last pre-fetch time and how much content was obtained, and the status of all attempts.

As an alternative, the present system may provide an XML schematized list of URLs. It may be desirable that fetching this URL return a well formatted XML list of content URLs to be pre-fetched of type application/xml. The following is one possible embodiment of the XML schema:

```
            <?xml version="1.0" encoding="utf-8"?>
            <xs:schema attributeFormDefault="unqualified"
            elementFormDefault="qualified"
            xmlns:xs="http://www.w3.org/2001/XMLSchema">
             <xs:element name="pre-fetchUris">
              <xs:complexType>
               <xs:sequence>
                <xs:element maxOccurs="40" minOccurs="1" name="uri"
            type="xs:anyURI" />
               </xs:sequence>
              </xs:complexType>
             </xs:element>
     </xs:schema>
```

### Pre-fetch Initiator Process

In many embodiments, the pre-fetch initiator process may track the applications that are opted into pre-fetching and make the decision which applications to pre-fetch.

As discussed in many of the embodiments herein, the present system may determine a number of pre-fetch conditions - e.g., those conditions that may be germane to a decision whether pre-fetch should take place or not. For example, the present system may be monitoring system resource availability, predictive measures for whether a given application may be pre-launched and/or likely to be activated by a user and data on whether past pre-fetches for a given application may have been successful or not.

These conditions may be used to shape and/or inform a number of pre-fetch policy rules that may determine - e.g., taking into consideration these conditions (possibly as a threshold test and/or some heuristic) - whether to actually pre-fetch data or not. There are many different decision policies that the pre-fetch initiator may implement in order to decide which app to pre-fetch. These policies may, in some embodiments, be implemented as a set of rules and/or heuristics:
1. System and user policy: Pre-fetching may be performed if users have granted permission to pre-fetch in the given system state, and if system metrics of network, battery, and CPU resources are met - e.g., if some set of system resource availability is over a desired threshold amount.
2. Previous pre-fetch benefit: Pre-fetch may be prioritized for apps that have exhibited benefit in past pre-fetches. The pre-fetch process is responsible for calculating this benefit score and providing it back to the initiator process. Good scores may be prioritized over bad scores.
3. App usage: Pre-fetch may be performed for apps which the operating system pre-launches. Pre-launch modules may affect a number of pre-launch policies - including, simple pre-launch, aggressive pre-launch and a predictive pre-launch. In one embodiment, the system may determine a predictive measure of whether a given application is likely to be activated by a user; and thus, would be a candidate for being pre-launched. In another embodiment, it may be possible to pre-fetch without pre-launch. Other rules may guide the system as to whether user is likely to use a particular app.

A first embodiment for pre-fetch initiator process module would be to have the users and/or the system identify those apps that may take benefit from a pre-fetch. In such a case, the system may perform pre-fetch, according to some simple rules and/or heuristics. For example, pre-fetch may be performed according to a given state of the app (e.g., suspended or not running). In addition, pre-fetch may be performed only when a certain level of system resources (e.g., a threshold amount of processing, communications and memory) are available. Sandboxing policy may also be applied to the pre-fetch process to further constrain its impact on the device (e.g., low CPU, I/O, and memory priority). This rule/heuristic may tend to keep the user experience of the computer system unaffected during times of pre-fetch.

A second embodiment for pre-fetch initiator module may be based on past benefits to pre-fetching certain apps. The present system may maintain statistics regarding which apps in the past have been pre-fetched and then subsequently actuated by the user. Measured or estimated time savings for the pre-fetched apps (versus when the app is not pre-fetched) may form a rules set for pre-fetching apps. For example, if the benefit of pre-fetch any given app is over a benefit threshold then the app may be pre-fetched - when in a given state and/or according to system resources.

In one such embodiment, the pre-fetch initiator process may determine if a benefit score is to be calculated for past pre-fetch attempts. This is decided by tracking the time of the last pre-fetch and the time of the last application launch. If the application has been launched in the time period since the last pre-fetch, then the pre-fetch initiator process will request the pre-fetch process to calculate the benefit score. This score is stored by the pre-fetch initiator process and is used in deciding future pre-fetch operations.

A third embodiment for pre-fetch initiator module may be based on whether the operating system has identified certain apps for pre-launching. Such pre-launching (and when and to which apps it occurs) may be performed under a set of rules and/or heuristics. In some implementations, the rules for pre-launch may be simple, aggressive and/or based on predictions of when the app may be activated.

### Optional Pre-Launching

As discussed, one embodiment for pre-fetching may incorporate any system pre-launching policies that may reside on in the computer system. As is disclosed here, there are a number of prediction and pre-launch modules and/or techniques to pursue.

System 400 comprises a number of (possibly optional) modules that may reside in an operating system, running on a processor within a computer system (e.g., smart phone, smart device, tablet, laptop, desktop or the like). In an alternative embodiment, some (or all) of these modules may reside apart from the operating system - but in communication with the operating system of a computer system. It should be appreciated that there are a number of possible implementations of the present system and that the scope of this present application encompasses all such possible implementations and/or embodiments.

Pre-launch services module 402 comprises a set of processing modules - e.g., prediction engine 404, resource monitor 406, pre-launch policy 408 and pre-launch queue 410. Prediction engine 404 may comprise a set of rules and/or heuristics that may aid the present system to assess the probability of a particular application may be required and/or desired to be running by a user of the computer system - as described in greater detail herein. Resource monitor 406 may assess the utilization of the computer system's resources - e.g., the currently available processing and/or memory resources for the potential pre-launching of applications. Pre-launch policy 408 may inform the present system as to the rules and/or heuristics for when the present system to desirably pre-launch one or more applications. Pre-launch queue 410 may access a set of data and/or metadata regarding applications that may have been pre-launched and/or are desired to be pre-launched.

It will be appreciated that one or more of these modules may be optional for the purposes of the present application. It may suffice that the present system be capable of determining which applications are "good" candidates for pre-launching - e.g., whether because of the probability of being selected by a user, because of available resources to pre-launch an app, because the rules and/or heuristics have selected a particular app for pre-launching - or any combination of the above factors.

These modules may be accessed via a set of external interfaces and/or APIs 412 - e.g., that allow other modules to access the present system. For example, servicing 414 may send signals to system 402 that identify apps that have pre-launched. Process Lifetime Manager (PLM) 416 may request prediction data for possible apps to consider for pre-launching. Pre-Launch API 418 may receive signals from system 402 to pre-launch particular apps. In one embodiment, the PLM may be responsible for deciding the current app execution state for any app -- as well as deciding which apps should remain in memory (suspended) vs. terminated.

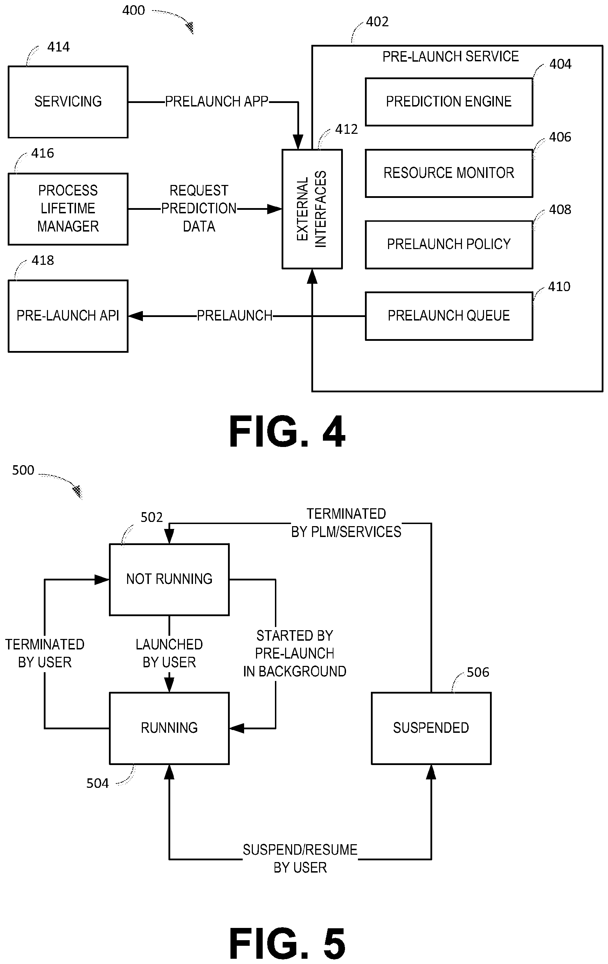

FIG. 5 depicts one state diagram 500 for an app, as the present system may affect during the lifecycle of the app. In general, an app running and/or available to the computer system may comprise a plurality of states - e.g., Not Running 502, Running 504 and/or Suspended 506. As may be seen, if an app is in Not Running state 502, then the app may be induced to Running State 504 in a number of different ways. For example, the app may be launched by the user. In another example, the app may be pre-launched by the present system, depending upon the data/metadata - and/or the satisfaction of rules/heuristics of the present system that determine whether a given app should be pre-launched.

It will be appreciated that for the purposes of the present application, a suitable "user" may be the human user of the computer system - or it may be another application that may desire the execution/suspension/termination of the app in question. The scope of the present application encompasses all such manners of "users".

When an app is in the Running state 504, then the app may be placed into the Suspended state 506 by a suitable user of the computer system. In addition, a Running app may be terminated by such a suitable user of the computer system. These transitions may be affected in whole or part by the present system. If an app is in Suspended state 506, then the app in question may be resumed by a suitable user - or may be terminated, e.g., by PLM and/or Servicing modules.

As may be seen, the present system may allow a terminated app (e.g., in Not Running state 502) to be pre-launched in background. In one embodiment, this pre-launched, terminated app may be transitioned into the Suspended state 506 and made ready to resume - as the path to Running state 504.

In one embodiment, throttling may be enabled for the app being activated by pre-launch. If the app was previously terminated by user, it may be activated by pre-launch to its initial state and - in one scenario, a splash screen may appear momentarily when the app is activated. If the app was terminated by PLM, it may be activated by pre-launch to its last saved state with backstack location restored. If the app is already present in the suspended state, pre-launch may ignore it.

### Embodiments of Prediction Engines

There are many different possible embodiments for a suitable prediction engine. For example, the following is a set of possible Predictors for the purposes of the present application:

### (1) Most Common Predictor

This predictor may return a probability of 1.0 for the top 20 most frequently activated apps and 0.0 for all others.

### (2) Most Used Predictor

This predictor may return a probability of (Total Usage Time for App) / (Total Usage Time for All Apps).

### (3) Null Predictor

This predictor always returns a probability of 0.0. In this case, the present system would not make use of any prediction value assigned to apps; but may nonetheless apply desired rules and/or heuristics for the pre-launching of apps.

### (4) Adaptive Predictor

This predictor may identify situations in the past that are similar to the current situation by considering the current foreground app, the last foreground app and how long the current app has been in usage. Once it has identified these situations, the predictor may return the percentage of situations which resulted in the queried event occurring within the prediction window.

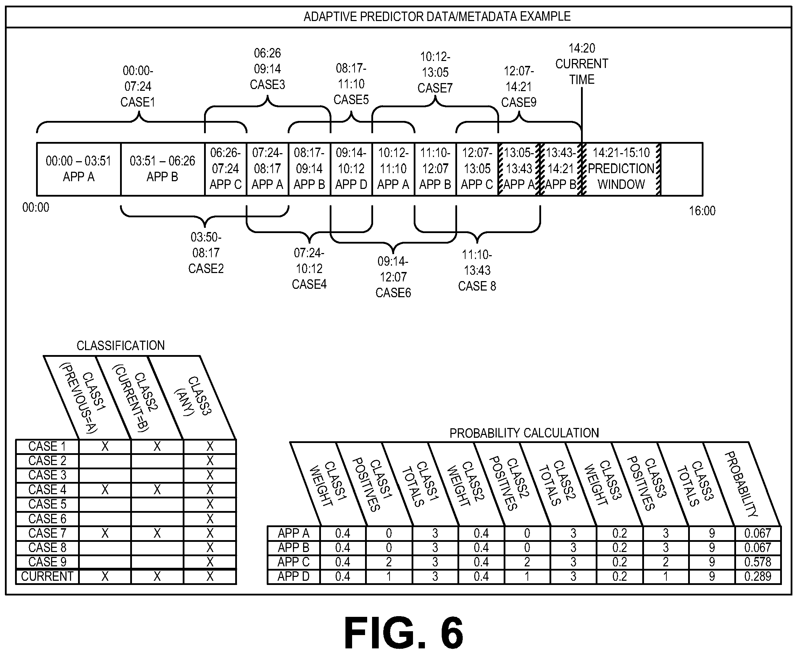

In reference to FIG. 6, the adaptive predictor may operate on groupings of application usage periods, referred to as "cases". As shown in FIG 6., one manner of creating cases may be affected by taking groups of (e.g., 3 or any desired number) adjacent application usage periods. It will be appreciated that it is also possible to create cases using other groupings such as current app switch, previous app switch, and any period that falls within the prediction window after the app switch.

To determine the probability of "App X" being switched to in the next prediction window, the predictor may iterate over all of the cases and classify each of them based on their properties. Once the case is classified, the present system may adjust the counts for each class the case matches. Each class may have a count of positive cases and a count of total cases. A case is "positive" if App X is switched to within the case.

Once such cases have been classified and counts updated, the present system may determine which classes the current situation matches and assign weights to the classes. These weights could be static or could depend on factors such as the number of total cases in a class and whether the current situation matches the class - e.g., assign weights (such as, 0.4, 0.4, and 0.2). Once weights have been assigned, it may be possible to compute a final probability by taking the weighted sum of (Positive Cases) / (Total Cases) for each class.

Prediction engine module may receive activity data of a given app's lifecycle (e.g., the number of times an app is activated by a user, the time of day of activation, length of time of activation, and the like). These uses of an app may form a set of "cases" of use of an app. Each case may be assessed a calculated, predicted and/or estimated probability of future and/or potential activation.

Adaptive prediction may start and if the app being considered by the prediction engine has never been seen before, then the probability of the app needing pre-launched may be given an initial value -e.g., zero and the process may end.

Otherwise, the app has been seen and/or considered before. This occurrence may be set as the most recent case of this app. Adaptive prediction may classify this current case and update the count for this case. The engine may consider whether there are any further additional cases to consider at this time and, if so, the engine may increment the current case appropriately. When all current cases have been considered, then the engine may classify the current situation.

When the data has been so classified and/or processed, the engine may then calculate the probability of potential activation, based on desired rules and heuristics. Such rules and/or heuristics might comprise: a time weighted average of the amount of time the app is running, the time of day in which the app is activated and/or running or the like.

FIG. 6 depicts one exemplary set of data/metadata that may be maintained by an adaptive prediction module. This data/metadata may be stored as appropriate, either within the computer system or external to the computer system. As may be seen, this example considers the data of four apps (i.e., A, B, C and D) over the course of a desired period of time. It will be appreciated that the period of time may be varied according to the desire of the present system - e.g. a day, a week, etc.

In this example, from time = 00:00 until 14:20 (the Current Time of the example), there are a number of cases (Case1, ....., Case 9) that are considered by the present system. These cases may represent periods of overlapping time (e.g., Case1 and Case2, etc.) - or they may be non-overlapping, as desired. Each Case may commence upon some signal - e.g., the activation and/or use of an app (e.g., that moves an app from suspended to running). In this example, it may be seen that Case4 is the current situations and Cases1-3 represent historic entries. Cases 5 through 9 are yet to be processed by the adaptive prediction engine.

As these Cases are processed, each case may be classified into any number of Classes. Each Class may be pre-defined as a use case and/or model of the user (e.g., which may vary depending on whether the user is at work, in what activities the user is engaged, or the like). The adaptive predictive engine may continue to process these cases - e.g., to provide predictions for the Prediction Window (which is shown as a desired time period past the current time).

This Classification data may be used to perform the probability calculation for possible weights. As may be seen, the final probabilities may be calculated and/or estimated as possibly pertaining to the desired Prediction Window.

Once these probabilities have been set, they may be utilized by other modules of the present system - e.g., Pre-launch Policy - as a part of the rules and/or heuristics to determine whether to pre-launch a given app or not.

### (5) Switch Rate Predictor

In this embodiment, it may be possible to provide a model based on individual and/or community data that uses possibly generic attributes like switch frequency and time in the app to make its predictions.

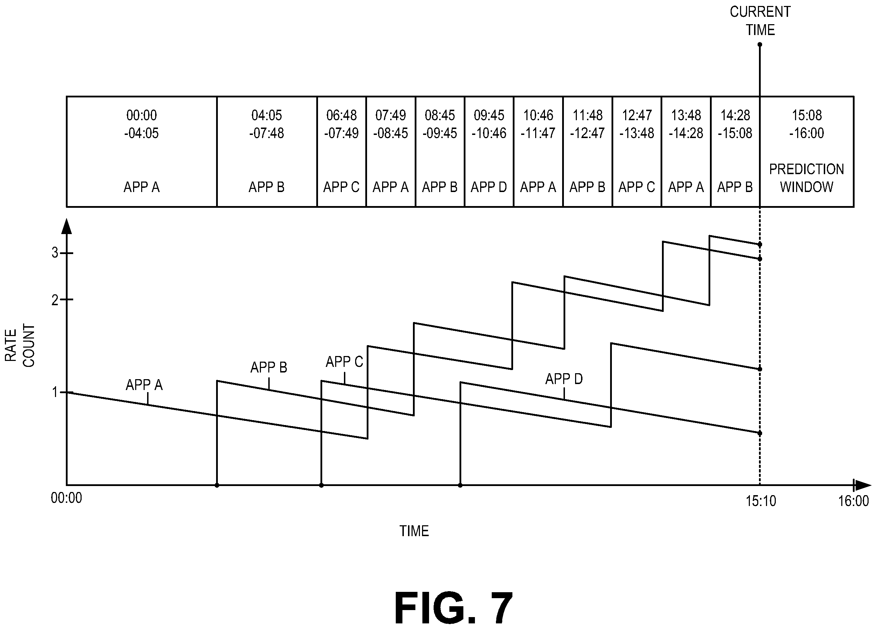

In reference to FIG. 7, one rate predictor may operate on app switches. Such a rate predictor may iterate over all app switches in the history and maintain a variety of information -- e.g., Rate Counts and Durations. Rate counts and durations may be divided into classes, for example it is possible to keep separate counts and durations for different times of day.

In one embodiment, for every app switch, the predictor may first decay all of the counts and durations. This may be done by applying an exponential decay based on the time since the last app switch; however other possible decay functions do exist.

Once the decays have been applied, the present system may classify the app switch and increment the corresponding rate count. The present system may then classify the time leading up to this app switch, possibly splitting the time period between different classes and add the times to the corresponding durations. For example, if the classes are Before Noon and Afternoon, the current time is 12:30 and the last app switch was at 11:00, the present system may add 1 hour to Before Noon and 30 minutes to Afternoon.

Once the present system has processed the application switches, the present system may classify the current situation. The present system may then assign weights to each class and compute the weighted sum - e.g., of (Rate Count) / (Duration) for each class. This gives the present system a final rate which may then be converted into a probability.

FIG. 7 depicts one exemplary set of data regarding four apps (A,B,C and D) that shows the switches between the various apps over time. For example, consider the rate curve labeled "App A" in FIG. 7. It starts with a rate count of 1 at time 00:00 - as App A is activated and running at that time. The slope of that curve is less than one - showing that a decay rate is being applied over time. Such a decay rate may depending on heuristics (e.g., the longer time between switches for an app, the less "popular" the app is for a user). It will be appreciated that - even though the decay rate is shown as a linear decline, there may be more complicated decay rates and/or functions to reflect a different model and/or heuristic.

At time 07:49, App A is activated again and the rate count is a step up from where it was. The final value for App A could be 2 or less, depending on decay rates being applied. Similar step ups occur for App A at times 10:46 and 13:48 - and decay rates are thereafter applied.

The same sort of description may be applied to each App B, C and D in a similar fashion. These rate curves may then be applied by the pre-launch module according to some rules and/or heuristics - e.g., certain apps have a switch rate over some threshold may be pre-launched.

In another embodiment of a suitable prediction module, the present system may attempt to determine the probabilities of applications being launched within a given time window. The launch prediction model may be affected as an API which may provide prediction information for app switches.

In this embodiment, the prediction module may attempt to take into consideration past user behavior to predict future behavior. Based conceptually on the fact that people (and users) are "creatures of habit", the following predictions may be attempted for a prediction time T:
1. Given the current app (N) and previous app (N-1), history is examined to determine the frequency of the next app launched given the (N,N-1) pair. The probability expects to see a desired threshold number of cases of an app being launched after the (N,N-1) pair. If the desired threshold or greater of cases are found, then probabilities are weighted. If less than the desired threshold, then the following may occur:
2. The current app is examined (N) is examined and history is examined to determine if a pattern emerges. Again, the system is looking for the desired threshold number of cases and/or occurrences of the same pattern for N, N+1 are required. If not found, then the following may occur:
3. The previous app (N-1) is examined in the same way to determine if a pattern emerges for apps started within time T of app N-1. Again, the system tests for the desired threshold number of occurrences.

In some embodiments, this prediction model may use the following inputs:
1. Foreground switches - this tells when an app is foreground versus background. The present system may have the ability to know when the classic desktop is up.
2. User away as provided by typically provided.
3. Log off as available as subscribe events today
4. App install/uninstall.

### Embodiments of Pre-launch Policy

In many embodiments, pre-launch policy module may determine a variety of actions --- e.g. (1) what triggers prediction to be run; (2) determining the apps which should be activated through pre-launch; and/or (3) how the pre-launch behaves with changing power states and system resource usage of the computer system.

There are a number of potential pre-launch policies available to the present system. For merely two examples, the present system may adopt: (1) a simple pre-launch policy and (2) an aggressive pre-launch policy.

For the simple pre-launch policy, it may be desirable to pre-launch all apps that have a probability of being launched within the pre-launch prediction window above a desired probability threshold and/or bar. It may be desirable to pre-launch as many apps as can fit in memory without triggering a PLM policy and to perform pre-launches in decreasing order of probability.

For a more aggressive pre-launch policy, it may be desirable to selectively pre-launch apps that meet a desired probability threshold/bar - e.g., with the exception that it does not try to avoid the PLM being triggered. In one such case, the pre-launch policy module may launch such apps until memory is full.

In many embodiments, the prediction engine and pre-launch policy modules may not always be running and may control their own scheduling. In one embodiment, these modules may be run at desired intervals. For example, if the computer system is not in connected standby, prediction engine module may be run at a fixed interval (e.g., at 15 minutes intervals or the like). This interval may vary or be reduced, if prediction is not considered to be an inexpensive process.

### Pre-fetch Process Module

Once it has been determined which app to pre-fetch (e.g., by any one of the various embodiments discussed herein), the pre-fetch process is responsible for performing the actual pre-fetch for the content.

In one embodiment, pre-fetch service may operate as follows:
1. At some regular time interval, the pre-fetch service may first check network and power conditions as well as user settings to determine if any pre-fetch should performed.
2. If so, the pre-fetch service may determine which apps should be pre-fetched by using rules and/or heuristics as detailed herein - and possibly in conjunction with any available pre-launch module.
3. For each app that will have pre-fetch performed, the pre-fetch service may schedule a background task to both measure the success of the last pre-fetch for the app and to perform pre-fetch.

### Tracking Participating Apps

In one embodiment, it may be desirable that the pre-fetch service knows if an application is participating in the pre-fetch process. In one implementation, the pre-fetch service may maintain a participation list of applications which should be considered for pre-fetch.

### Selecting Pre-fetch Apps

To aid the pre-fetch process, the following information may be tracked by the pre-fetch service for each app that uses pre-fetch:
1. LastSwitchTime - the timestamp at which the app was last switched to (launched or resumed).
2. LastPre-fetchTime - the timestamp at which the last pre-fetch for the app completed.
3. Pre-fetchBenefitHistory - list of scores for each of the last BenefitScoreHistorySize "successful" pre-fetches for the app that measure the benefit of performing pre-fetch for the app calculated off the number of known cache hits and misses for resources. It should be noted that for a pre-fetch's benefits to be calculated and included in the history, the pre-fetch may be followed by a user launch of the app prior to a subsequent pre-fetch.

On each regular heartbeat PollingHeartbeat, the pre-fetch service may determine which apps to pre-fetch as follows:
1. Retrieve last switch time and last pre-fetch time for each app that uses the feature.
2. For each app that has not been switched to or pre-fetched for within the past LastFetchWindow (e.g., 6 hours) but has been launched (by the user) within the last LastUserAppRunWindow (e.g., 72 hours), retrieve the Pre-fetchBenefitHistory.
3. Further filter the list of apps to potentially pre-fetch for based on launch prediction model.
4. Calculate the average pre-fetch benefit score for each app based on its Pre-fetchBenefitHistory. Sort apps by average benefit score.
5. The number of apps to perform pre-fetch may be based on power and network state using conditions provided by the background task infrastructure.
6. First launch pre-fetch background tasks (e.g., in random order or any suitable order) for as many apps that do not yet have any Pre-fetchBenefitHistory scores up to the limit determined in step 5.
7. If the limit determined in step 5 has not yet been reached, launch pre-fetch background tasks in order of the calculated average pre-fetch benefit score for as many apps as possible up to the limit.

To aid in the above processing, the following configuration parameters may be considered by the present system:
1. BenefitScoreHistorySize -- The number of previous "successful" pre-fetches for which the pre-fetch benefit score should be tracked for factoring into future pre-fetch decisions;
2. LastFetchWindow -- Minimum time in minutes since the time an app was last switched to or pre-fetched for in order for the app to be a candidate for pre-fetch;
3. LastUserAppRunWindow -- Maximum time in hours since the app was last used;
4. Pre-fetchMediumCost -- Maximum number of apps for which pre-fetch is performed when the cost of the background task is medium. For example, in the case of battery usage, the cost may be considered "medium" when the device is being actively used and on DC power; "low" when on AC power; and "high" when in standby on DC power.;
5. Pre-fetchLowCost -- Maximum number of apps for which pre-fetch is performed when the cost of the background work is low.

### Effect Of App Update On Cache Hit Rate

If a developer does not do a good job of hinting which URIs should be pre-fetched for their app, the pre-fetch benefit score for the app may be low and the present system may stop performing pre-fetch for that app. In order to give developers the chance to correct this, the stored Pre-fetchBenefitHistory may be cleared for an app when it is updated. This may tend to ensure that the present system pre-fetches for the app at least once after the update has been performed before re-penalizing the app for poor success rate.

Although the goal of resetting the Pre-fetchBenefitHistory on app update is to give apps that had poor scores a second chance, this may also affect apps that have good scores. This may be acceptable since the apps that previously had good scores may also get at least one opportunity to perform pre-fetch ahead of any apps that have not been updated.

### Initiating pre-fetch

Once the pre-fetch service has determined the list of apps to pre-fetch, the present system may launch a background task to perform the pre-fetch. In addition to pre-fetch, a background task may be used because: (1) it runs in app security context; (2) it is typically resource efficient (e.g., runs in a small container process outside of the app process); (3) it is subject to low priority memory/CPU/I/O; and/or (4) it is subject to resource sandboxing to limit overall battery impact (e.g., CPU, network).

To launch the background task, the following operations may be performed by the pre-fetch service:
1. The pre-fetch service may first obtain a token for the user - or any other sufficient datum.
2. Once the token and/or datum is obtained, the pre-fetch service may "impersonate" the user. By "impersonate", it may be possible that to assume the user's context (as opposed to running, as in a system context) which would be more privileged than a user.
3. While impersonating the user, the pre-fetch service may create an "immediate" background trigger event which may fire substantially immediately - e.g., using TbCreateEvent(). This event may have the following conditions:
   a. A network available condition to ensure a network is present
   b. If the user has disabled the feature on costed networks, a free network condition may be set to ensure that the background task is not ran on costed networks
   c. For the highest ranked Pre-fetchMediumCost number of apps, a Medium cost trigger may be used.
   d. For the next Pre-fetchLowCost number of apps which comes after those described in (c.) above a Low Cost trigger may be used
4. Once an event is created with the conditions above, the service may revert back to the system account and use the trigger to schedule the background task using BIAssociateApplicationExtensionClass() API. The service may communicate to the background process whether or not the background process is to perform the cache hit rate calculation by passing the information to the background task at task creation time.
5. The resulting work item may be canceled if the app is launched before the background task starts.

### Communicating with app container

In one embodiment, it may be desirable to have the app container code communicate to the service for the following reasons:
1. The app container may communicate to the service that an app is participating in the pre-fetch feature; and/or
2. The app container may communicate to the service the cache hit rate data.

In one implementation to facilitate this communication, an internal only RPC interface may be implemented and exposed by the service that allows app containers to call it. In some embodiments, the RPC interface may be designed to handle the following scenarios:
1. Allow client APIs to indicate pre-fetch is enabled for an app;
2. Allow client APIs to indicate pre-fetch is disabled for an app;
3. Reporting the pre-fetch benefit score to the pre-fetch service;
4. Report that pre-fetch is starting for an application;
5. Reporting the pre-fetch background task has stopped and the reason for the stop;
6. Allow OS API to start the pre-fetch background service for an app immediately without condition.

### Background task

In many embodiments of the present system, a background task may be employed to perform the actual pre-fetching of the app provided URIs. The background task work may encompass the following areas:
1. Registration: this may include the work to register the background task for each app, including DEH work and contract definition.
2. Activation: this may include how the background task is activated, and what if anything is communicated to the background task.
3. Runtime: this may include the runtime behavior of the background task including how it operates to retrieve URIs (e.g., both content and XML file options)

### Registration

In order to launch a background task for an application, it may be desirable to register the background task. Background tasks may then be activated (e.g., via an extension model). In one embodiment, one mechanism for registering extensions and classes for an application may be provided via a Deployment Extension Handler (DEH) at package deployment time. Deployment Extension Handlers (DEH) are components that adhere to a common interface and are invoked during the deployment of a modern package (e.g., APPX package) to augment the package deployment. Rather than introduce a new registration or activation mechanism, a DEH may register the background task for apps that contain any of the network capabilities. This may be similar to the way in which the background download APIs work. It may be desirable to register this background task from the DownloadUpload DEH. In addition, the registration for a background task may register an activatable class which contains the implementation of the pre-fetching logic.

### Activation

The background task may implement the runtime class for the contract activation performed by the pre-fetch service.

### Runtime

In one embodiment, the runtime of the background task may perform the calculation of the success of the previous pre-fetch and make the actual HTTP requests to retrieve the developer specified content. In one embodiment, the background task may performs the following work:
1. If indicated by the pre-fetch service to calculate the benefit score, the background task may calculate the benefit score and communicate this to the pre-fetch service;
2. Load content URIs or content source URI;
3. If content source is from a URI, download and parse;
4. Download resources that may not be already cached, keeping track of which downloads succeeded and failed;
5. When all downloads complete or the BG task is cancelled, inform the pre-fetch service of the completion state and store the list of successfully downloaded URIs via the RPC interface.

### Calculating Pre-fetch Benefit Score

In one embodiment, the pre-fetch service may determine whether pre-fetch apps may rely on the previous known cache hit and miss rates for previous pre-fetches. This information may be maintained for each app and for which the app was in fact launched within the time window. When indicated by the pre-fetching service, the benefit score may be calculated as and reported to the pre-fetch service as follows:
1. Read from the registry the list of URIs for which download was attempted and whether the download succeeded (see section 7.4.3.2)
2. LastBenefitScore = 0
3. Query to calculate LastBenefitScore as follows: for each URI for which download was attempted:
   a. If the download succeeded and the resource was served from cache, LastBenefitScore := LastBenefitScore + 1
   b. If the downloaded succeeded and the resource was not served from cache, LastBenefitScore := LastBenefitScore - 1
   c. If the download did not succeed, LastBenefitScore := LastBenefitScore - 1
4. RPC to the pre-fetch service's Report Pre-fetchBenefitScore method to report the calculated LastBenefitScore

### Performing Pre-fetch

As previously mentioned, to actually perform pre-fetch, the background task may first retrieve the list of developer specified URIs. If a content source URI is obtained, then the background task may fetch this URI, validate the XML and parse this XML to obtain the list of URIs to fetch. In another embodiment, a cloud service may send a push notification to the device indicating that new content is available. This may increase the probability associated with running the pre-fetch task, including causing the pre-fetch task to run right away.

Once the list of content URIs is obtained, the background task may first check if the requested URL is still valid in the cache. This may be desirable to avoid poisoning cache hit rates for success metrics. If the URI is not valid in the cache, the background task may fetch these URIs and in doing so, the results may end up in the cache. The newly introduced HTTP client APIs may be used for this purpose. The fetching may continue until either the pre-fetch list is exhausted or the background process is out of resources.

Optionally, in order to identify the pre-fetching feature to external sites, a suitable header may be included in all requests, including the request for the content source XML if desired. This may be used by servers to change responses for the pre-fetching service. For example, a service may choose to redirect to a new XML list, or a service under load my chose to fail pre-fetching requests to failing actual user requests.

When making network requests, the background process may need to handle a set of http status codes. The following codes may be handled by the background service. All other status codes may be ignored:
1. 200, 304 -- resource may be stored in cache; track URI as successfully downloaded;
2. 301,305,307 -- perform a request for the URI indicated in the Location field of the response. If a 200 or 304 response is then received, resource may be stored in the cache and the URI should be tracked as successfully downloaded. Following redirects may not cause fetch to recurse over URIs.;
3. All others -- track URI as failed.

### Tracking Pre-fetch Success Rates

In one embodiment, the success rate of pre-fetching may be tracked and fed back to the pre-fetch process to dynamically refine the process. To do this, the actual URLs that were last pre-fetched may be durably stored. In one implementation, it may be possible to set a reg value under the following registry value:
1. LastPre-fetchedUris -- contains the set of URIs that were attempted to be pre-fetched and whether the attempt succeeded. This includes the redirected URIs for any 3XX HTTP status codes, and any URIs that may have failed due to other reasons (e.g. 503, 504, 408). If an attempt to fetch the URI is made, it may be placed in this list.

### Completing/Aborting

The background task may be aborted before completion for any of the following reasons:
1. Abort -- the background task was canceled by the application. This may happen for one of the following reasons:
   a. The task is considered an idle task. This means that the background task may still be running, but without doing anything - for example, a JavaScript task that does not call the close() function.
   b. The background task uses the MaintenanceTrigger and the system transitions to DC (battery power).
   c. The app that registered the background task is uninstalled while the task is running.
2. Terminating -- the background task was canceled because the application is about to be terminated due to system policy.
3. LoggingOff -- the background task was canceled because the user has logged off the system.
4. ServicingUpdate -- the background task was canceled because the application was updated.

When the background task completes or is aborted, it may fire a Crimson event indicating whether it was completed or aborted and, if aborted, the Crimson event may include the cancellation reason.

Call the pre-fetch service's ReportCacheHitRate method to inform the pre-fetch service of the previous pre-fetch benefit score and of the fact that the task is no longer running. It may be noted that this call may be made even if the background task did not calculate the previous pre-fetch benefits core so that the service's LastPre-fetchTime is still updated.

It may be noted that in the case where the background task is aborted, it will be given a desired time period -- e.g., 5 seconds (wall clock time) -- prior to being terminated in which to complete the above work.

Background processes may make good use of a user's resources. This includes ensuring a running background task does not interfere with an active user's experience or that the background task does not consume too much CPU, memory or battery resources. Because of this, a background task may experience an "out of resource" condition where the resource is the artificial limits set by the system on the background task. Since this feature is using the existing background task host infrastructure, the existing resource limits may apply to the background pre-fetch process.

What has been described above includes examples of the subject innovation. It is, of course, not possible to describe every conceivable combination of components or methodologies for purposes of describing the claimed subject matter, but one of ordinary skill in the art may recognize that many further combinations and permutations of the subject innovation are possible. Accordingly, the claimed subject matter is intended to embrace all such alterations, modifications, and variations that fall within the scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the claimed subject matter. In this regard, it will also be recognized that the innovation includes a system as well as a computer-readable medium having computer-executable instructions for performing the acts and/or events of the various methods of the claimed subject matter.

In addition, while a particular feature of the subject innovation may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. A method for pre-fetching data for applications, said applications capable of running in a computer system, said computer system comprising a controller, a memory and an operating system, said data stored at a content source remote from said computer system, the method comprising:
- associating a set of applications with a set of data, said data capable of being retrieved from a set of content sources;
- determining a prediction measure of when an application may be activated by a user, wherein the prediction measure is determined based on modeling with a switch rate predictor;
- determining a set of pre-fetch conditions, said pre-fetch conditions comprising one of a group, said group comprising: system resource availability, predictive measure of whether an application may be pre-launched, data on user settings for pre-fetch, data on whether previous pre-fetches for a given application were successful;
- determining which applications may be pre-fetched; and
- if said set of conditions satisfied a given policy, performing pre-fetch of data from said content source,
**characterized in that** said modeling with a switch rate predictor comprises:
- maintaining switch rate data on the application over time;
- providing a switch measure for when the application is likely to be switched;
- applying a decay rate to the switch rate data over time; and
- changing the switch measure based on the decay rate.

2. The method of Claim 1 wherein associating a set of applications further comprises: associating an application with one of a group, said group comprising: data from a set of URLs, data from a set of URIs and data from a response made to a web service by said application.

3. The method of Claim 1 wherein associating a set of application further comprises:
providing an application with an API, said API capable of providing the computer system with data regarding the data to be pre-fetched for said application.

4. The method of Claim 1 wherein determining a set of pre-fetch conditions further comprises:
monitoring system resources of said computer system; and
further wherein said system resources comprises one of a group, said group comprising: CPU utilization, GPU utilization, memory utilization, I/O utilization and battery state of charge.

5. The method of Claim 1 wherein said determining a set of pre-fetch conditions further comprises:
determining a measure of the likelihood of an application being pre-launched.

6. The method of Claim 5 wherein the prediction measure is determined based on one of a group, said group comprising: modeling based on order of application usage, modeling based on frequency of application usage, modeling based on time of day of application usage, modeling based on location of application usage, modeling using most common application predictor, modeling using most used predictor, modeling using a null predictor, and modeling with an adaptive predictor.

7. A system for pre-fetching data for applications, said applications capable of running in a computer system, said computer system comprising a controller, a memory and an operating system, said data stored at a content source remote from said computer system, said system comprising:
a set of APIs, each said APIs associated with an application and each said API capable of storing data to be pre-fetched for said application;
a pre-fetch initiator policy module, said pre-fetch initiator policy module capable of initiating the pre-fetch process, depending upon a set of pre-fetch conditions;
a pre-fetch process module, said pre-fetch process module capable of pre-fetching data from a remote content source for an application identified by said pre-fetch initiator policy module; and
a computer storage, said computer storage capable of storing said pre-fetched data from said remote content source, such that said pre-fetched data may be made available to said application,
wherein said pre-fetch initiator policy module further comprises a prediction module capable of giving a prediction measure of when an application may be activated by a user, and
wherein the prediction measure is given by a switch rate prediction module,
**characterized in that** the switch rate prediction module is configured to:
- maintain switch rate data on the application over time;
- provide a switch measure for when the application is likely to be switched;
- apply a decay rate to the switch rate data over time; and
- change the switch measure based on the decay rate.

8. The system of Claim 7 wherein said prediction module is one of a group, said group comprising: prediction module based on order of application usage, prediction module based on frequency of application usage, prediction module based on time of day of application usage, prediction module based on location of application usage, prediction module using most common application predictor, prediction module using most used predictor, prediction module using a null predictor, and an adaptive prediction module.

9. The system of Claim 7 said pre-fetch initiator policy module further comprising a set of policies, said policies comprising one of a group, said group comprising:
system resource policy rules, user pre-fetch policy rules, pre-launch policy rules and previous pre-fetch benefit rules.

10. The system of Claim 7 wherein said system further comprises:
a pre-fetch success module, said pre-fetch success module capable of:
measuring success data for the current pre-fetch; and
changing some policies, depending on said success data.

## Patentansprüche

1. Verfahren zum Vorabruf von Daten für Anwendungen, wobei die Anwendungen in einem Computersystem ausführbar sind, wobei das Computersystem eine Steuerung, einen Speicher und ein Betriebssystem umfasst, wobei die Daten in einer von dem Computersystem getrennten Inhaltsquelle gespeichert sind, wobei das Verfahren umfasst:
- Verknüpfen eines Satzes Anwendungen mit einem Satz Daten, wobei die Daten von einem Satz Inhaltsquellen abrufbar sind;
- Bestimmen eines Vorhersagemaßes dafür, wann eine Anwendung möglicherweise von einem Benutzer aktiviert wird, wobei das Vorhersagemaß auf der Grundlage einer Modellierung mit einem Prädiktor für Umschaltraten bestimmt wird;
- Bestimmen eines Satzes Vorabrufbedingungen, wobei die Vorabrufbedingungen eine einer Gruppe umfassen, wobei die Gruppe umfasst: Verfügbarkeit von Systemressourcen, Vorhersagemaß dafür, ob eine Anwendung möglicherweise vorabgestartet wird, Daten über Benutzereinstellungen für den Vorabruf, Daten darüber, ob vorherige Vorabrufe einer bestimmten Anwendung erfolgreich waren;
- Bestimmen, welche Anwendungen möglicherweise vorabgerufen werden; und
- Durchführen eines Vorabrufs von Daten von der Inhaltsquelle, wenn der Satz Bedingungen eine bestimmte Richtlinie erfüllt,
**dadurch gekennzeichnet, dass** die Modellierung mit einem Prädiktor für Umschaltraten umfasst:
- Verwalten von Umschaltratendaten der Anwendung über einen Zeitraum;
- Bereitstellen eines Schaltmaßes dafür, wann ein Umschalten der Anwendung wahrscheinlich ist;
- Anlegen einer Abnahmerate an die Umschaltratendaten über einen Zeitraum; und
- Ändern des Schaltmaßes auf der Grundlage der Abnahmerate.

2. Verfahren nach Anspruch 1, wobei das Verknüpfen eines Satzes Anwendungen weiterhin umfasst: Verknüpfen einer Anmeldung mit einer Gruppe, wobei die Gruppe umfasst: Daten eines Satzes URL, Daten eines Satzes URI und Daten einer durch die Anwendung durchgeführten Antwort an einen Web-Dienst.

3. Verfahren nach Anspruch 1, wobei das Verknüpfen eines Satzes Anwendungen weiterhin umfasst: Bereitstellen einer Anwendung mit einer APL, wobei die APL dem Computersystem Daten betreffend die für die Anwendung vorabzurufenden Daten bereitstellen kann.

4. Verfahren nach Anspruch 1, wobei das Bestimmen eines Satzes Vorabrufbedingungen weiterhin umfasst:
Überwachen von Systemressourcen des Computersystems; und
wobei die Systemressourcen weiterhin eine einer Gruppe umfassen, wobei die Gruppe umfasst: CPU-Nutzung, GPU-Nutzung, Speichernutzung, I/O-Nutzung und Ladezustand der Batterie.

5. Verfahren nach Anspruch 1, wobei das Bestimmen eines Satzes Vorabrufbedingungen weiterhin umfasst:
Bestimmen eines Maßes für die Wahrscheinlichkeit des Vorabstarts einer Anwendung.

6. Verfahren nach Anspruch 5, wobei das Vorhersagemaß auf der Grundlage einer der Gruppe bestimmt wird, wobei die Gruppe umfasst: Modellierung auf der Grundlage einer Reihenfolge der Anwendungsnutzung, Modellierung auf der Grundlage einer Häufigkeit der Anwendungsnutzung, Modellierung auf der Grundlage eines Zeitpunkts einer Anwendungsnutzung, Modellierung auf der Grundlage eines Orts der Anwendungsnutzung, Modellierung unter Verwendung des üblichsten Prädiktors der Anwendung, Modellierung unter Verwendung des am häufigsten verwendeten Prädiktors, Modellierung unter Verwendung eines Null-Prädiktors und Modellierung mit einem adaptiven Prädiktor.

7. System zum Vorabruf von Daten für Anwendungen, wobei die Anwendungen in einem Computersystem ausführbar sind, wobei das Computersystem eine Steuerung, einen Speicher und ein Betriebssystem umfasst, wobei die Daten in einer von dem Computersystem getrennten Inhaltsquelle gespeichert sind, wobei das System umfasst:
einen Satz APL, wobei jede APL mit einer Anwendung verknüpft ist und jede APL Daten, die für die Anwendung vorabzurufen sind, speichern kann;
ein Modul mit einer Richtlinie für einen Vorabrufinitiator, wobei das Modul mit einer Richtlinie für einen Vorabrufinitiator den Vorabrufprozess in Abhängigkeit von einem Satz Vorabrufbedingungen einleiten kann;
ein Modul für einen Vorabrufprozess, wobei das Modul für einen Vorabrufprozess Daten von einer Fern-Inhaltsquelle für eine Anwendung abrufen kann, die von dem Modul mit einer Richtlinie für einen Vorabrufinitiator identifiziert wurde; und
ein Computerspeicher, wobei der Computerspeicher die Vorabrufdaten von der Fern-Inhaltsquelle speichern kann, sodass die Vorabrufdaten der Anwendung verfügbar gemacht werden können,
wobei das Modul mit einer Richtlinie für einen Vorabrufinitiator weiterhin ein Vorhersagemodul umfasst, das ein Vorhersagemaß dafür abgeben kann, wann eine Anwendung möglicherweise von einem Benutzer aktiviert wird, und
wobei das Vorhersagemaß von einem Modul für die Vorhersage von Umschaltraten abgegeben wird,
**dadurch gekennzeichnet, dass** das Modul für die Vorhersage von Umschaltraten zu Folgendem ausgelegt ist:
- Verwalten von Umschaltratendaten der Anwendung über einen Zeitraum;
- Bereitstellen eines Schaltmaßes dafür, wann ein Umschalten der Anwendung wahrscheinlich ist;
- Anlegen einer Abnahmerate an die Umschaltratendaten über einen Zeitraum; und
- Ändern des Schaltmaßes auf der Grundlage der Abnahmerate.

8. System nach Anspruch 7, wobei das Vorhersagemodul eines einer Gruppe ist, wobei die Gruppe umfasst: Vorhersagemodul auf der Grundlage einer Reihenfolge der Anwendungsnutzung, Vorhersagemodul auf der Grundlage einer Häufigkeit der Anwendungsnutzung, Vorhersagemodul auf der Grundlage eines Zeitpunkts eines Tages einer Anwendungsnutzung, Vorhersagemodul auf der Grundlage eines Orts der Anwendungsnutzung, Vorhersagemodul zur Verwendung des üblichsten Prädiktors der Anwendung, Vorhersagemodul unter Verwendung des am häufigsten verwendeten Prädiktors, Vorhersagemodul unter Verwendung eines Null-Prädiktors und ein adaptives Vorhersagemodul.

9. System nach Anspruch 7, wobei das Modul mit einer Richtlinie für einen Vorabrufinitiator weiterhin einen Satz Richtlinien umfasst, wobei die Richtlinien eine einer Gruppe umfassen, wobei die Gruppe umfasst: Regeln für Systemressourcenrichtlinien, Regeln für Richtlinien zum Vorabruf durch Benutzer, Regeln für Vorabstartrichtlinien und Regeln für den Nutzen vorheriger Vorabrufe.

10. System nach Anspruch 7, wobei das System weiterhin umfasst:
ein Modul für den Vorabruferfolg, wobei das Modul für den Vorabruferfolg in der Lage ist:
Erfolgsdaten für den aktuellen Vorabruf zu messen; und
einige Richtlinien in Abhängigkeit von den Erfolgsdaten zu ändern.

## Revendications

1. Procédé de pré-recherche de données pour des applications, lesdites applications étant capables de s'exécuter dans un système informatique, ledit système informatique comprenant un contrôleur, une mémoire et un système d'exploitation, lesdites données stockées au niveau d'une source de contenu distante dudit système informatique, ce procédé comprenant :
- l'association d'un ensemble d'applications à un ensemble de données, lesdites données pouvant être récupérées à partir d'un ensemble de sources de contenus ;
- la détermination d'une mesure de prédiction du moment où une application peut être activée par un utilisateur, la mesure de prédiction étant déterminée sur la base d'une modélisation avec un prédicteur de taux de commutation ;
- la détermination d'un ensemble de conditions de pré-recherche, lesdites conditions de pré-recherche comprenant une parmi un groupe, ledit groupe comprenant : une disponibilité de ressources système, une mesure prédictive permettant de savoir si une application peut être pré-lancée, des données sur les réglages utilisateurs pour la pré-recherche, des données indiquant si des pré-recherches précédentes pour une application donnée ont été réussies ;
- la détermination des applications qui peuvent être pré-recherchées ; et
- si ledit ensemble de conditions respecte une stratégie donnée, réalisation d'une pré-recherche données à partir de ladite source de contenu,
**caractérisé en ce que** ladite modélisation avec un prédicteur de taux de commutation comprend :
- le maintien de données du taux de commutation sur l'application dans le temps ;
- la réalisation d'une mesure de commutation pour quand l'application est susceptible d'être commutée ;
- l'application d'un taux de détérioration pour les données du taux de commutation dans le temps ; et
- le changement de la mesure de commutation sur la base du taux de détérioration.

2. Procédé selon la revendication 1, dans lequel l'association d'un ensemble d'applications comprend en outre :
l'association d'une application avec un élément parmi un groupe, ledit groupe comprenant : des données provenant d'un ensemble d'URL, des données provenant d'un ensemble d'URI et des données provenant d'une réponse faite à un service web par ladite application.

3. Procédé selon la revendication 1, dans lequel l'association d'un ensemble d'applications comprend en outre :
la fourniture d'une application avec une API, ladite API étant capable de fournir au système informatique des données concernant les données à pré-rechercher pour ladite application.

4. Procédé selon la revendication 1, dans lequel la détermination d'un ensemble de conditions de pré-recherche comprend en outre :
la surveillance des ressources système dudit système informatique ; et
lesdites ressources système comprenant en outre un élément parmi un groupe, ledit groupe comprenant : l'utilisation de la CPU, l'utilisation de la GPU, l'utilisation de la mémoire, l'utilisation E/S et l'état de charge de la batterie.

5. Procédé selon la revendication 1, dans lequel la détermination d'un ensemble de conditions de pré-recherche comprend en outre :
la détermination de la probabilité du pré-lancement d'une application.

6. Procédé selon la revendication 5, dans lequel la mesure de prédiction est déterminée sur la base d'un élément parmi un groupe, ledit groupe comprenant : une modélisation basée sur l'ordre d'usage des applications, une modélisation basée sur la fréquence d'usage des applications, une modélisation basée sur l'heure du jour de l'usage des applications, une modélisation basée sur la localisation d'usage des applications, une modélisation utilisant le prédicteur d'application le plus commun, une modélisation utilisant le prédicteur le plus utilisé, une modélisation utilisant un prédicteur nul, et une modélisation avec un prédicteur adaptatif.

7. Système de pré-recherche de données pour des applications, lesdites applications étant capables de s'exécuter dans un système informatique, ledit système informatique comprenant un contrôleur, une mémoire et un système d'exploitation, lesdites données stockées au niveau d'une source de contenu distante dudit système informatique, ledit système comprenant :
un ensemble d'API, chacune desdites API étant associée à une application et chacune desdites API étant capable de stocker les données à pré-rechercher pour ladite application ;
un module de stratégie d'initiation de pré-recherche, ledit module de stratégie d'initiation de pré-recherche étant capable d'initier le processus de pré-recherche en fonction d'un ensemble de conditions de pré-recherche ;
un module de processus de pré-recherche, ledit module de processus de pré-recherche étant capable de pré-rechercher des données dans une source de contenu distante pour une application identifiée par ledit module de stratégie d'initiation de pré-recherche ; et
un stockage informatique, ledit stockage informatique étant capable de stocker lesdites données pré-recherchées dans ladite source de contenu distante, de façon à ce que lesdites données pré-recherchée puissent être rendues disponibles pour ladite application,
ledit module de stratégie d'initiation de pré-recherche comprenant en outre un module de prédiction capable de donner une mesure de prédiction du moment où l'application peut être activée par un utilisateur et
la mesure de prédiction étant donnée par un module de prédiction de taux de commutation, **caractérisé en ce que** le module de prédiction de taux de commutation est conçu pour :
- maintenir des données du taux de commutation sur l'application dans le temps ;
- réaliser une mesure de commutation pour quand l'application est susceptible d'être commutée ;
- appliquer un taux de détérioration pour les données du taux de commutation dans le temps ; et
- changer la mesure de commutation sur la base du taux de détérioration.

8. Système selon la revendication 7, dans lequel ledit module de prédiction est un parmi un groupe, ledit groupe comprenant : un module de prédiction basé sur l'ordre d'usage des applications, un module de prédiction basé sur la fréquence d'usage des applications, un module de prédiction basé sur l'heure du jour d'usage des applications, un module de prédiction basé sur la localisation d'usage des applications, un module de prédiction utilisant le prédicteur d'application le plus commun, un module de prédiction utilisant le prédicteur d'application le plus utilisé, un module de prédiction utilisant un prédicteur nul et un module de prédiction adaptatif.

9. Système selon la revendication 7, ledit module de stratégie d'initiation de pré-recherche comprenant en outre un ensemble de stratégies, lesdites stratégies comprenant une parmi un groupe, ledit groupe comprenant : des règles de stratégie de ressources système, des règles de stratégie de pré-recherche d'utilisateur, des règles de stratégie de pré-lancement et des règles de bénéfices des pré-recherches précédentes.

10. Système selon la revendication 7, dans lequel ledit système comprend en outre :
un module de succès de pré-recherche, ledit module de succès de pré-recherche étant capable :
mesurer des données du succès pour la pré-recherche courant ; et
changer certaines stratégies en fonction desdites données du succès.
